Europäisches Patentamt

European Patent Office

Office européen des brevets

(11) Numéro de publication: **0 477 661 A1**

## DEMANDE DE BREVET EUROPEEN

(21) Numéro de dépôt: **91115350.0**

(22) Date de dépôt: **11.09.91**

(51) Int. Cl.⁵: **C21C 5/44**, F27D 1/16

(30) Priorité: **26.09.90 LU 87812**

(43) Date de publication de la demande:
**01.04.92 Bulletin 92/14**

(84) Etats contractants désignés:
**AT BE DE ES FR GB IT NL SE**

(71) Demandeur: **ARBED S.A.**
**Avenue de la Liberté 19**
**L-2930 Luxembourg(LU)**
Demandeur: **PAUL WURTH S.A.**
**32 rue d'Alsace**
**L-1122 Luxembourg(LU)**

(72) Inventeur: **Kremer, Norbert**
**124 rue du Parc**
**L-3542 Dudelange(LU)**
Inventeur: **Beck, Georges**
**10 square André**
**L-1127 Luxembourg(LU)**
Inventeur: **Bock, André**
**9 rue Ludwig v. Beethoven**
**L-1224 Luxembourg(LU)**
Inventeur: **Hennico, Charles**
**1 rue de Vichten**
**L-8707 Useldange(LU)**

(74) Mandataire: **Freylinger, Ernest T. et al**
**Office de Brevets FREYLINGER & ASSOCIES**
**B.P. 1 321, route d'Arlon**
**L-8001 Strassen(LU)**

(54) **Dispositif de manutention automatique d'objets.**

(57) Le dispositif monté à l'extrémité d'un bras de manoeuvre comprend une ou plusieurs ventouses pour supporter des objets, par exemple des briques réfractaires pour le maçonnage d'un convertisseur métallurgique, des moyens de déplacement linéaire et angulaire des ventouses, des capteurs pour surveiller et commander automatiquement les moyens de déplacement pour saisir et positionner les objets à un endroit prédéterminé, après immobilisation du bras de manoeuvre. Les ventouses (26) sont prévues sur un plateau porte-ventouses (28) supporté, à son tour, par une paire de patins (30, 32) pouvant coulisser dans des glissières transversales (36, 38) d'un chariot (40) qui comporte une paire de glissières longitudinales (46, 48) perpendiculaires aux glissières transversales (36, 38) et logées de façon coulissante dans un support central (50) rattaché à l'extrémité du bras de manoeuvre (20) avec un degré de liberté angulaire et degré de liberté linéaire orthogonal aux axes des glissières longitudinales et transversales .

Fig. 1

La présente invention concerne un dispositif de manutention automatique d'objets, monté à l'extrémité d'un bras de manoeuvre et comprenant une ou plusieurs ventouses pour supporter lesdits objets, des moyens de déplacement linéaire et angulaire desdites ventouses, des capteurs pour surveiller et commander automatiquement lesdits moyens de déplacement pour saisir et positionner lesdits objets à un endroit prédéterminé après immobilisation du bras de manoeuvre.

Quoique n'y étant pas limité, la présente invention concerne plus particulièrement un manipulateur de briques réfractaires pour la réalisation d'un revêtement réfractaire intérieur d'une enceinte métallique, tel qu'un convertisseur d'aciérie et l'invention sera décrite plus en détail en référence à cette application avantageuse.

On assiste actuellement à une percée de mécanisation plus ou moins évoluée de maçonnage de convertisseurs, allant depuis l'automatisation du circuit d'amenée des briques par des systèmes facilitant le travail manuel au niveau de la plate-forme de maçonnage, jusqu'à des systèmes robotisés pour le maçonnage intégral des convertisseurs. Une telle installation de maçonnage de convertisseur est par exemple décrite dans le document FR 2,638,774.

Les raisons de l'introduction de systèmes automatiques et robotisés de maçonnage de convertisseurs sont essentiellement d'ordre économique et ergonomique. Toutefois, la mise en oeuvre de robots en remplacement du travail manuel ne peut être prise en considération que lorsqu'elle permet d'éliminer pratiquement toute intervention manuelle et lorsque la cadence de travail est au moins aussi rapide et précise que la pose manuelle.

Pour augmenter la rapidité et la précision du maçonnage, le document EP 0226076 B1 propose un robot de travail qui est installé sur une plate-forme à l'intérieur du convertisseur et dont la particularité est que les fonctions de transport des briques, d'une part et la mise en place de celles-ci, d'autre part, sont séparées. Ceci est réalisé grâce à un manipulateur automatique prévu à l'extrémité du bras de manoeuvre du robot. Ce bras de manoeuvre amène les briques automatiquement à vitesse rapide jusque dans une zone de travail formant le champ d'action du manipulateur et se trouvant à une distance prédéterminée des briques déjà posées et de la paroi du convertisseur pour éviter tout risque de collision. Le bras de manoeuvre du robot est ensuite immobilisé dans cette zone de travail et le manipulateur prend en charge le positionnement précis, à vitesse réduite, des briques.

Le manipulateur est équipé de palpeurs et de détecteurs de déplacement pour surveiller et commander automatiquement l'action des différents éléments permettant le positionnement exact des briques. Les mesures fournies par les détecteurs et palpeurs de positionnement permettent également de recalculer après chaque pose d'une brique le mouvement à effectuer par le bras de manoeuvre pour déplacer la prochaine brique dans le champ d'action du manipulateur et/ou d'ordonner par l'ordinateur de commande au robot de choisir un autre type de brique pour adapter le maçonnage à la courbure et aux déformations de la paroi du convertisseur.

On peut reprocher à ce manipulateur un certain manque de souplesse et de flexibilité, notamment dû au fait que les briques sont maintenues entre deux griffes d'une pince. Ceci exige une manoeuvre très précise du manipulateur, car toute erreur de calcul, aussi petite soit elle, occasionne une collision avec les briques déjà posées ou la chute d'une brique sur les briques déjà posées en cas d'ouverture de la pince. Par ailleurs, l'absence de possibilités de pivotement des briques ou du manipulateur autour d'un axe radial est un handicap lorsque le plan de pose n'est pas parallèle au plan de la plate-forme, par exemple lorsque la pose est effectuée en spirale ou que la plate-forme est légèrement inclinée par rapport à l'horizontale. Un autre inconvénient est le fait que la brique est posée sur la brique sous-jacente et contre la brique voisine avant d'être poussée dans sa position définitive en direction de la paroi. Ce frottement sur les briques voisines et sous-jacentes peut être à l'origine d'un déplacement de celles-ci et nécessite, en outre, des forces plus importantes, ce qui augmente la puissance et la taille du manipulateur.

Le but de la présente invention est de prévoir un manipulateur perfectionné dans lequel les briques sont maintenues par des ventouses et qui présente une plus grande souplesse de travail avec une puissance de manoeuvre réduite.

Pour atteindre cet objectif, l'invention propose un dispositif de manutention automatique d'objets du genre décrit dans le préambule qui, dans son mode de réalisation préféré, est essentiellement caractérisé en ce que les ventouses sont prévues sur un plateau porte-ventouses supporté, à son tour, par une paire de patins pouvant coulisser dans des glissières transversales d'un chariot, ledit chariot comprenant, en outre, une paire de glissières longitudinales, perpendiculaires aux glissières transversales et logées de façon coulissante dans un support central rattaché à l'extrémité du bras de manoeuvre avec un degré de liberté angulaire et un degré de liberté linéaire, orthogonal aux axes des glissières longitudinales et transversales.

Le plateau porte-ventouse est, de préférence, rattaché aux patins par l'intermédiaire de tampons élastiques en caoutchouc.

Contrairement au manipulateur connu décrit ci- dessus, les objets sont portés par des ventouses en caoutchouc et non par des pinces. Cette suspension par ventouses, en association avec les tampons élastiques confère plus de souplesse à la manoeuvre et à la manipulation et permet de compenser ou d'absorber les petits chocs, c'est-à-dire ce qui est appelé en robotique "complaisance passive".

Selon un mode de réalisation préféré, le dispositif comporte deux poulies de traction montées respectivement sur chacun des patins et quatre poulies de renvoi montées respectivement aux quatre coins du chariot, un moteur pneumatique à mouvements alternatifs fixé sur le chariot, un premier câble de traction tendu entre l'une des extrémités du moteur et le chariot, en passant par une poulie de renvoi et la poulie de traction d'un patin pour faire coulisser celui-ci dans une première direction transversale, un second câble de traction tendu entre l'extrémité opposée du moteur et le chariot, en passant par deux poulies de renvoi et la poulie de traction de l'autre patin pour faire coulisser celui-ci dans une seconde direction transversale opposée à la première et un câble de synchronisation tendu entre deux points opposés du chariot en passant par la poulie de traction de chacun des patins et trois poulies de renvoi pour transmettre le mouvement de celui des patins qui est tracté par le moteur sur l'autre patin et vice-versa. Autrement dit, dans une première direction, c'est le premier patin qui est tracté par le moteur, le second patin suivant le mouvement du premier patin par l'intermédiaire du câble de traction, alors que dans la direction opposée, c'est le second patin qui est tracté par le moteur pneumatique et le premier patin suit le mouvement du second patin par l'effet du câble de synchronisation. Il en résulte une synchronisation parfaite entre les mouvements des deux patins, ce qui élimine tout risque de coincement, comparé au cas où les deux patins seraient actionnés simultanément par le moteur.

Le moteur pneumatique et l'un des patins peuvent être associés, chacun, à un capteur de déplacement.

Le chariot est, de préférence, associé à plusieurs capteurs mesurant son déplacement et sa position suivant trois axes de coordonnées orthogonaux.

Le support central peut être solidaire d'une tige de piston d'un cylindre pneumatique dont le déplacement est orthogonal aux axes des glissières longitudinales et transversales, tandis que le cylindre est rotatif autour de l'axe de déplacement de son piston grâce à une suspension à roulement du cylindre dans l'extrémité du bras de manoeuvre. Ce cylindre pneumatique peut être associé à un capteur de déplacement axial du piston.

Le degré de liberté angulaire entre le cylindre pneumatique et le bras de manoeuvre est complété par un degré de liberté angulaire entre le piston et le cylindre, ce dernier degré de liberté étant neutralisable sur commande grâce à deux ressorts pneumatiques fixés sur le support central de part et d'autre d'un bras solidaire du cylindre pneumatique.

Le cylindre pneumatique et son piston peuvent être associés à un capteur angulaire pour mesurer l'angle de la rotation du chariot et du piston permise par le degré de liberté neutralisable.

D'autres particularités et caractéristiques ressortiront de la description détaillée d'un mode de réalisation avantageux d'un dispositif de manutention automatique de briques de maçonnage d'un convertisseur, décrit ci-dessous, à titre d'illustration, en référence aux dessins annexés dans lesquels:

la Figure 1 montre schématiquement, partiellement en coupe, une vue latérale du manipulateur;

la Figure 2 montre schématiquement une vue en plan du même manipulateur et

les Figures 3 à 14 représentent schématiquement les différentes phases opératives de transport et de pose d'une brique à l'aide du manipulateur selon la présente invention.

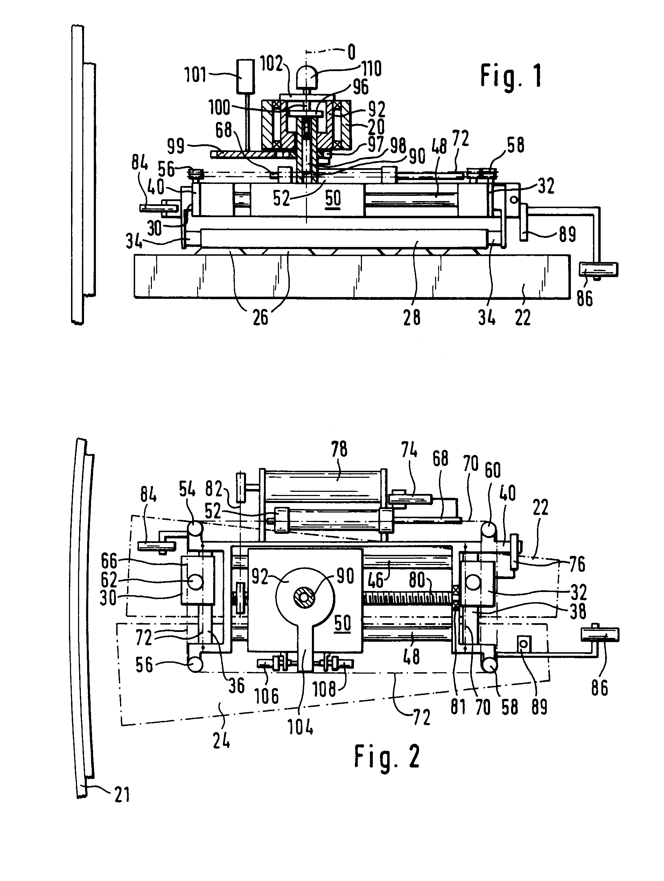

Les Figures 1 et 2 représentent un manipulateur selon la présente invention monté à l'extrémité d'un bras de manoeuvre 20 d'un robot non représenté mais prévu sur une plate-forme déplaçable à l'intérieur d'un convertisseur pour le maçonnage de la paroi 21 de celui-ci. Le manipulateur est représenté sur les Figures 1 et 2 en position opérative pour le positionnement d'une brique 22 contre une brique déjà placée 24 après immobilisation du bras de manoeuvre 20 dans le champ d'action du manipulateur. Comme représenté sur la Figure 2, les briques 22 ont une section trapézoïdale afin de pouvoir réaliser un maçonnage circulaire. En outre, pour pouvoir adapter le maçonnage à différents rayons de courbures et compenser des déformations éventuelles de la paroi du convertisseur on dispose en général de deux types de briques à conicités différentes.

Comme le montre la Figure 1, les briques sont saisies par le manipulateur par l'intermédiaire d'une série de ventouses 26 prévues sur la face inférieure d'un plateau porte-ventouses 28 et raccordées à une pompe à vide non représentée. Le plateau porte-ventouses 28 est supporté par deux patins 30, 32 par l'intermédiaire de plusieurs tampons élastiques en caoutchouc 34. La brique 22 n'est donc pas supportée de manière rigide par le manipulateur. Grâce aux tampons 34 et au caractère flexible des ventouses en caoutchouc 26 le plateau 28 est comparable à une sorte de coussin avec une certaine souplesse permettant d'absorber les petits chocs et de compenser certaines irrégularités ou imprécisions de manoeuvre. Cette souplesse permet également d'adapter la pose à différentes pentes selon le rayon du convertisseur, lorsque le maçonnage se fait en spirale ou de compenser une légère pente de la plate-forme par rapport au plan de maçonnage.

Il est à noter que la présence de plusieurs ventouses 26 autorise le branchement sélectif de celles-ci à différents circuits d'aspiration afin de pouvoir manipuler des briques de différentes longueurs sans changer de plateau porte-ventouses.

Comme représentés sur la Figure 2, les deux patins 30, 32 peuvent respectivement coulisser le long de deux glissières transversales 36, 38 qui font partie d'un chariot 40 formant l'armature du manipulateur.

Le chariot 40 comporte, en outre, deux glissières longitudinales 46, 48 qui sont perpendiculaires aux glissières transversales 36, 38 et qui traversent un support central 50 dans lequel elles sont supportées et à travers lequel elles peuvent coulisser longitudinalement. Dans la position de la Figure 2, le plateau porte-ventouses 28 est donc déplaçable avec la brique 22 transversalement en direction de la brique posée 24 par glissement des patins 30 et 32 sur les glissières 36 et 38, alors qu'un déplacement longitudinal du chariot 40 par coulissement des glissières 46, 48 à travers le support central 50 permet un déplacement du plateau 28 et de la brique 22 parallèlement à la brique déjà posée 24. Le coulissement des patins 30 et 32 sur leurs glissières 36 et 38 est engendré sous l'action d'un moteur, en l'occurrence un moteur pneumatique 52 fixé sur l'un des côtés longitudinaux du chariot 40.

Selon l'une des particularités de la présente invention, cet entraînement des patins 30 et 32 est réalisé par des câbles de traction. A cet effet, le chariot 40 porte sur chacun de ses coins supérieurs une poulie de renvoi 54, 56, 58 et 60. Comme le montre la Figure 1, chacune des ces poulies de renvoi est une poulie double, c'est-à-dire avec deux gorges superposées pour pouvoir faire passer deux câbles autour de la même poulie. En principe les poulies 54 et 56 pourraient être des poulies simples, mais pour des raisons de commodité ou de possibilité d'échange il est préférable qu'elles soient toutes doubles. Sur les deux patins 30 et 32 sont en outre prévues deux poulies de traction 62 respectivement 64, également des poulies doubles. Un premier câble de traction 66 représenté en traits interrompus longs est tendu entre le chariot 40 et l'une des extrémités de la tige de piston 68 du moteur pneumatique 52 en passant par la poulie de traction 62 du patin 30 et la poulie de renvoi 54. Un second câble de traction 70 est tendu entre l'autre extrémité de la tige de piston 68 et le chariot 40 en passant autour de la poulie de traction 64 de l'autre patin 32 et autour des poulies de renvoi 58 et 60. Un câble de synchronisation 72 représenté en traits interrompus courts est en outre tendu entre deux extrémités diamétralement opposées du chariot 40 en passant successivement autour de la première poulie de traction 62, autour des poulies de renvoi 56, 58 et 60 et autour de la seconde poulie de traction 64. Ces trois câbles sont tous fixés, au moins par une de leurs extrémités, à l'aide d'un écroutendeur, connu en soi, de manière à pouvoir ajuster leur tension et compenser tout allongement éventuel.

Lorsque le moteur pneumatique 52 est actionné à partir de sa position extrême sur la Figure 2 dans le sens d'un déplacement de sa tige 68 vers la gauche le câble 70 entraîne, par effet de treuil, la poulie 64 avec le patin 32 pour déplacer , ainsi, la brique 22 transversalement en direction de la brique 24. Ce mouvement est transmis par la poulie 64 sur le câble de synchronisation 72 qui, de ce fait, exerce le même effet de treuil sur la poulie 62 de l'autre patin 30, de sorte que celui-ci doit suivre le mouvement du patin opposé 32. Il y a donc une synchronisation parfaite et forcée entre les mouvements des deux patins 30 et 32, ce qui évite tout risque de coincement des patins sur leur glissière. Il est à noter que, par l'effet de treuil, la vitesse de déplacement des patins correspond à la moitié de la vitesse de déplacement de la tige 68, alors que la force de traction de la tige 68 est répartie équitablement sur chacune des poulies de traction 62 et 64.

Lorsque le mouvement du moteur pneumatique 52 est inversé pour déplacer la tige 68 vers la droite, par exemple dans la position illustrée sur la Figure 2, c'est le patin 30 qui subit, par l'intermédiaire du câble de traction 66, l'action de la tige 68, tandis que le mouvement du patin 30 tire, par l'intermédiaire de la poulie 62, le câble de synchronisation 72 qui, à son tour, entraîne le patin 32 dans un mouvement synchrone afin d'éloigner le plateau 28 transversalement de la brique 24.

La position et le déplacement de la tige 68 du moteur pneumatique 52 sont mesurés à l'aide d'un capteur 74 connu en soi. Un capteur analogue 76 est associé à l'un des patins, en l'occurrence au patin 32 pour mesurer la position et le déplacement transversal des patins et de la brique 22.

La commande pneumatique du moteur 52 est conçue de manière à détecter automatiquement le contact entre la brique 22 et la brique immobile 24 lors du déplacement tranversal par la contre-réaction au moment du contact. Cette commande pneumatique est en outre conçue pour actionner le moteur 52 à des pressions différentes suivant les besoins et les nécessités. C'est ainsi que le manipulateur fonctionne à pression moyenne lors d'un déplacement transversal avec la brique 22. Une faible pression est mise en oeuvre pour maintenir la brique 22 au contact de la brique immobile posée 24 alors qu'une forte pression est requise pour une correction éventuelle de la position de la brique à la fin de l'opération de pose.

Le déplacement longitudinal du chariot 40 par coulissement des glissières 46 et 48 à travers le support central 50 est réalisé par l'intermédiaire d'une vis sans fin 80 qui est logée de façon rotative dans un palier du chariot 40 et qui s'étend à travers le bloc 50 au centre des deux glissières longitudinales 46 et 48 parallèlement à celles-ci. Une rotation de cette vis 80 provoque, par conséquent, suivant son sens de rotation un déplacement, dans une direction ou dans l'autre du chariot 40 par rapport au bloc central 50. L'entraînement de la vis sans fin 80 peut être réalisé par une courroie dentée 82 sous l'action d'un moteur électrique 78 fixé sur le côté longitudinal du chariot 40 où se trouve également un moteur pneumatique 52.

Le manipulateur est équipé d'une série de détecteur de distance, par exemple des télémètres à rayonnement infrarouge ou à ultra-sons et dont les mesures sont utilisées pour surveiller et commander le déplacement des organes mobiles du manipulateur et éventuellement du bras de manoeuvre 20 et recalculer le programme automatique après chaque pose d'une brique. A l'avant du chariot 40 se trouve un télémètre 84 qui détermine la distance de la brique par rapport à la paroi 21 du convertisseur. Ce télémètre est associé à un télémètre 86 se trouvant à l'arrière du chariot 40 et qui mesure la distance par rapport à la face intérieure de la brique déjà posée 24. Ces deux télémètres 84 et 86 sont responsables de la commande du moteur électrique 78 qui engendre le déplacement longitudinal du chariot 40. Un troisième télémètre 89 est dirigé verticalement vers le bas et mesure la hauteur de la brique 22 par rapport à celle sur laquelle elle doit être posée. Ce télémètre 89 est responsable du mouvement vertical du manipulateur tel que décrit plus en détail par la suite. Au lieu d'être fixés sur le chariot 40, ces télémètres peuvent être montés, en cas de besoin, sur des bras escamotables afin de pouvoir les rabattre dans une position de garage pour ne pas gêner les mouvements du robot.

Les deux degrés de liberté linéaire dans le plan de pose de la brique gérés par les moteurs 52 et 78 sont complétés, au niveau de la liaison du manipulateur avec le bras de manoeuvre du robot 20, par un degré de liberté linéaire vertical perpendiculaire au plan des deux précédents et par un degré de liberté angulaire autour de l'axe de ce dernier degré de liberté linéaire vertical. La Figure 1 montre que le support central 50 est solidaire de la tige 90 du piston 96 d'un cylindre pneumatique 92 porté dans l'extrémité du bras de manoeuvre 20 par l'intermédiaire d'un roulement 94 permettant au cylindre pneumatique 92 une rotation autour de son axe O de mobilité de son piston 96 et de sa tige 90 par rapport au bras de manoeuvre 20. Le cylindre pneumatique 92 permet, par la mobilité axiale de son piston, de lever ou de descendre le chariot 40 et la brique 22 par rapport au bras de manoeuvre 20. Ce mouvement axial est non seulement orchestré par le programme de commande en fonction des mesures du télémètre 89, mais également mesuré et contrôlé par un détecteur de déplacement 98 incorporé dans le creux de la tige 90 du piston 96 et associé à un arbre axial 100 immobilisé axialement par rapport au piston 96 et sa tige 90. La référence 102 représente le couvercle de fermeture du cylindre 92.

Le circuit pneumatique de commande du cylindre 92 permet non seulement une compensation automatique du poids du manipulateur et de sa charge, mais également, lors de la descente du chariot, le contrôle de l'approche de la brique 22 du plan de maçonnage et sa pose en douceur sur la brique en place. Il fait, en outre, fonction de ressort pneumatique en cas d'erreur de calcul ou d'irrégularités géométriques de la brique à poser ou de celle qui est en place. Il permet également la remontée automatique du manipulateur immédiatement après la pose de la brique, après sa libération des ventouses 26.

La compensation du poids de la brique a l'avantage de réduire les forces de frottement. Elle permet, par conséquent, le choix d'une construction plus légère, notamment du chariot et des moteurs. En outre, elle réduit le risque d'un déplacement accidentel des briques déjà posées sous l'effet du frottement et réduit les forces de réaction sur le robot et la plate-forme.

En vue de la rotation du cylindre pneumatique 92 autour de l'axe O, un moteur approprié 101, par exemple un moteur électrique est monté sur le bras de manoeuvre 20 et agit par l'intermédiaire d'une courroie dentée ou d'un pignon d'entraînement 99 sur une couronne dentée 97 prévue, par exemple, sur la face inférieure du cylindre 92.

La rotation du cylindre 92 est transmise au bloc central 50 et au chariot 40 par l'intermédiaire d'un bras de commande 104 qui est solidaire du cylindre 92. Ce bras de commande est en forme de "L" et s'étend horizontalement au-dessus du support 50 et descend verticalement le long de son côté longitudinal qui est opposé à celui où se trouvent les moteurs 52 et 78. Sur ce même côté sont fixés deux ressorts pneumatiques 106 et 108 qui forment, lorsqu'ils sont actionnés, deux butées qui effleurent les deux côtés opposés de la section verticale du bras de commande 104 et immobilisent le support 50 par rapport au bras 104 et au cylindre 92. Toute rotation du cylindre pneumatique 92 autour de l'axe O modifie, par conséquent, par l'intermédiaire de son bras de commande d'orientation 104 la position angulaire du manipulateur autour de l'axe O. Il faut donc que les ressorts pneumatiques 106 et 108 soient suffisamment puissants pour que le support central et le chariot 40 puissent suivre le mouvement angulaire du bras 104. Par contre, leur effet de ressort leur permet de céder sous une force anormale, par exemple en cas de collision accidentelle du manipulateur avec un obstacle fixe, pour permettre au support et au chariot 40 d'occuper momentanément une orientation différente à celle imposée par le bras 104, ceci contre l'action de l'un ou l'autre des deux ressorts pneumatiques 106 et 108.

En outre, les deux ressorts 106 et 108 peuvent être neutralisés sur commande, de préférence automatiquement lors de la mise en service du moteur pneumatique 52, afin de libérer l'orientation du chariot 40 de la direction imposée par le bras 104 et de permettre un pivotement du chariot 40 autour de l'axe O dans les limites de l'écartement des deux ressorts pneumatiques 106 et 108. Ce pivotement, rendu possible par la liberté de rotation de la tige 90 et de son piston 96 par rapport au cylindre pneumatique 92 est notamment souhaitable lors du mouvement transversal du chariot 40 sous l'action du moteur 52 pour permettre une correction automatique de l'alignement de la brique 22 sur la brique déjà posée 24. Ce pivotement éventuel est détecté par un capteur angulaire 110 mesurant l'amplitude de rotation de l'arbre 100 qui, est solidaire en rotation de la tige 90. Cette mesure peut être utilisée pour commander une correction automatique de l'orientation du manipulateur par un changement de position angulaire du cylindre pneumatique 92 lors de la pose de la prochaine brique.

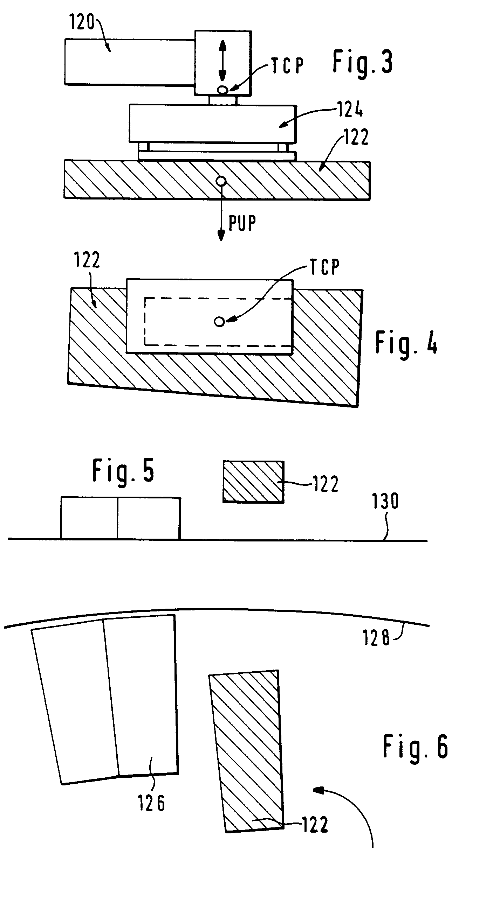

On va maintenant décrire en référence aux Figures 3 à 14 un cycle complet de prise en charge et de pose d'une brique. La prise en charge correcte d'une brique par le manipulateur sur la plate-forme de travail implique que le robot connaisse parfaitement l'orientation et la position de cette brique sur la plate-forme. La détermination automatique de ces paramètres peut être confiée, par exemple, à un système de vision électronique se composant d'une caméra avec une unité de traitement d'images. Par ailleurs, en vue du repérage, du positionnement, du déplacement et des mesures il est nécessaire d'identifier le manipulateur par un point de référence, en l'occurrence, le point TCP (Tool Center Point) représenté sur la Figure 3 et se trouvant de préférence sur l'axe verticale O du manipulateur. De même, la brique à saisir 122 est identifiée par un point de référence, en l'occurrence le point PUP (Pick Up Point) sur la Figure 3.

Le bras de manoeuvre 120 du robot et son manipulateur 124, dans une orientation programmée, sont amenés dans une position programmée au-dessus de la brique à saisir, de préférence pour que la position de référence TCP du manipulateur 124 soit en alignement vertical avec la position de référence PUP de la brique 122.

L'orientation du manipulateur 124 est, de préférence, déterminée de manière que son axe longitudinal soit parallèle au côté longitudinal de la brique 122 qui est destinée à entrer en contact physique avec une brique déjà en place. Lorsque le positionnement correct du robot et du manipulateur est réalisé, la saisie de la brique se fait par aspiration au moyen des ventouses 26 et par levage de la brique 122 par mise sous pression du cylindre pneumatique 92, ainsi que par déplacement du bras du robot.

Le bras de manoeuvre 120 est ensuite déplacé avec le manipulateur 24 et sa brique 122 à grande vitesse dans une zone proche de l'endroit visé pour l'emplacement de la brique 122, mais à une distance suffisante des briques déjà posées et de la paroi du convertisseur pour éviter tout risque de collision dans cette zone de sécurité. Les coordonnés de cette zone de sécurité sont déterminées automatiquement par les mesures effectuées par les télémètres et capteurs à l'occasion du positionnement de la brique précédente 126. La zone ainsi visée est illustrée par la position de la brique sur les Figures 5 et 6.

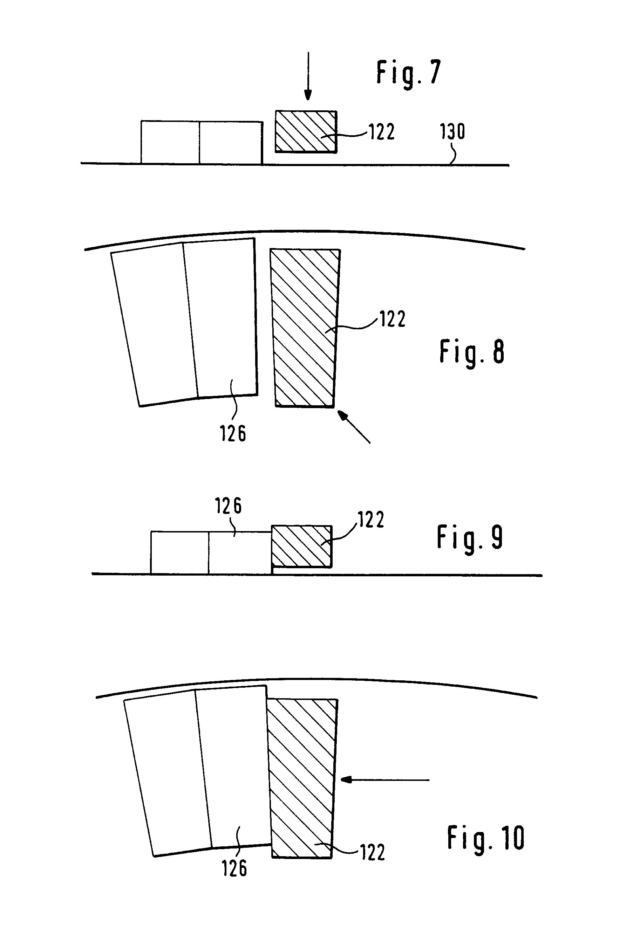

Dans cette position provisoire illustrée par les Figures 5 et 6 on mesure à l'aide des télémètres 84, 86, 88 et 89 si la distance de la brique 122 par rapport à la paroi 128 du convertisseur, par rapport à la brique voisine 126 ainsi que par rapport à la rangée de brique inférieure 130 ne dépasse pas le champ d'action du manipulateur 124. En supposant que c'est le cas, on rectifie à vitesse réduite la position provisoire selon la Figure 5 et 6 en fonction des mesures fournies par les détecteurs par déplacement du bras de manoeuvre 120 dans le sens des flèches jusqu'à ce que la brique occupe la position représentée sur les Figures 7 et 8. Dans cette position le robot est immobilisé et c'est le manipulateur qui va entrer en fonction pour effectuer le positionnement de la brique 122.

La prochaine phase consiste à déplacer la brique 122 dans le sens de la flèche illustrée sur la Figure 10 jusqu'à ce qu'il y ait contact physique avec la brique voisine 126. A cet effet, le moteur pneumatique 52 est actionné pour déplacer latéralement les patins et la plaque porte-ventouses 28 par l'intermédiaire des câbles de traction et de synchronisation. Lors de ce mouvement, on désactive les ressorts pneumatiques 106 et 108 pour permettre au chariot 40 et à la brique de pouvoir pivoter autour de l'axe vertical O par rapport au bras de stabilisation 104. Ceci permet de compenser un défaut d'orientation éventuelle de la brique par rapport à la brique en place 126. La combinaison de ce mouvement transversal et de la possibilité de pivotement assure un contact correct de la brique 122 avec la brique 126 sur toute la longueur de celle-ci comme illustrée sur la Figure 10. Le pivotement du manipulateur 40 lors de cette phase est détecté par le capteur 110 et est utilisé pour recalculer l'orientation du manipulateur pour la pose de la prochaine brique. De même, le capteur 76 mesure le déplacement latéral du patin 32 et cette mesure peut être utilisée pour recalculer le mouvement du robot pour la pose de la prochaine brique.

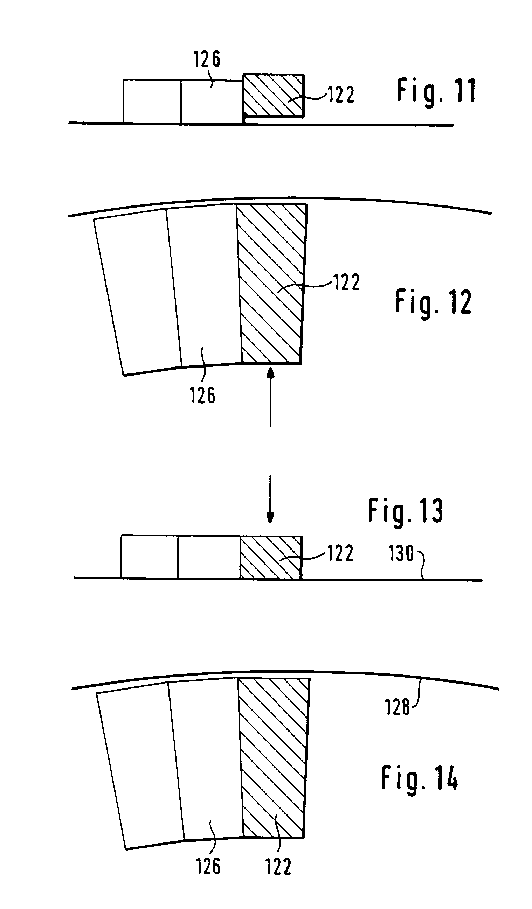

La phase suivante consiste à déplacer la brique 122 longitudinalement dans le sens de la flèche sur la Figure 12. A cet effet, le moteur 78 est actionné pour faire coulisser le chariot 40 du manipulateur longitudinalement à travers le support central 50. Lors de ce mouvement, la pression du moteur pneumatique 52 est réduite pour diminuer le frottement entre la brique 122 et la brique 126 mais est maintenue à une valeur suffisante pour maintenir le contact physique entre les briques. L'amplitude de ce déplacement est programmée en fonction des mesures effectuées lors de la pose des briques précédentes. Le mouvement est toutefois surveillé par le télémètre 84 qui mesure la distance jusqu'à la paroi 128 du convertisseur et qui peut éventuellement commander une correction du programme de déplacement longitudinal par le moteur 78, dans une direction ou dans l'autre, par exemple en cas de déformation de la paroi 128.

La pose de la brique 122 se termine par la descente dans la position définitive illustrée sur les Figures 13 et 14. A cet effet, le cylindre pneumatique 92 est actionné pour descendre le chariot 40 sous le contrôle des mesures fournies par le télémètre 89, ce qui permet de réduire la vitesse à l'approche de la surface 130 et d'assurer une pose en douceur de la brique 122. L'amplitude du mouvement de descente est mesurée par le détecteur de déplacement 98 et cette mesure est utilisée avec celle correspondant au déplacement longitudinal et transversal de la brique ainsi que les mesures éventuelles de pivotement angulaire autour du bras de stabilisation 104 pour calculer la position exacte de la brique et commander le mouvement du robot pour la pose de la prochaine brique.

Lorsque la brique 122 occupe la position correcte définitive, le moteur pneumatique 52 est désactivé par débranchement de sa source de pression pneumatique et les ventouses 26 sont déconnectées de la pompe à vide et éventuellement branchées sur une source de pression pour libérer rapidement la brique 22 du manipulateur qui est relevé par rapport au bras de manoeuvre 20 sous l'action du cylindre pneumatique 92.

Lors du chemin de retour du bras de manoeuvre 20 sur la plate-forme pour aller chercher la prochaine brique les deux ressorts pneumatiques 106 et 108 sont à nouveau activés pour assurer la stabilisation angulaire et l'orientation correcte du manipulateur par rapport au bras de manoeuvre 20. En même temps les moteurs 52 et 78 sont actionnés pour déplacer les éléments mobiles vers leur position de départ, tandis que les informations fournies par les capteurs de déplacement sont traitées dans l'ordinateur et, par comparaison avec des données de consigne le trajet du bras de manoeuvre est recalculé pour la pose de la prochaine brique. Le résultat de la comparaison entre les mesures de la position de la dernière brique et les données de consignes permet également de déterminer automatiquement s'il faut conserver le même type de brique ou s'il faut changer de type pour respecter la géométrie du maçonnage.

**Revendications**

1. Dispositif de manutention automatique d'objets, monté à l'extrémité d'un bras de manoeuvre et comprenant une ou plusieurs ventouses pour supporter lesdits objets, des moyens de déplacement linéaire et angulaire desdites ventouses, des capteurs pour surveiller et commander automatiquement lesdits moyens de déplacement pour saisir et positionner lesdits objets à un endroit prédéterminé, après immobilisation du bras de manoeuvre, caractérisé en ce que les ventouses (26) sont prévues sur un plateau porte-ventouses (28) supporté, à son tour par une paire de patins (30, 32) pouvant coulisser dans des glissières transversales (36, 38) d'un chariot (40), ledit chariot (40) comprenant, en outre, une paire de glissières longitudinales (46, 48) perpendiculaires aux glissières transversales (36, 38) et logées de façon coulissante, dans un support central (50) rattaché à l'extrémité du bras de manoeuvre (20) avec un degré de liberté angulaire et degré de liberté linéaire orthogonal aux axes des glissières longitudunales et transversales.

2. Dispositif selon la revendication 1, caractérisé en ce que le plateau porte-ventouses (28) est rattaché aux patins (30, 32) par l'intermédiaire de tampons élastiques (34) en caoutchouc.

3. Dispositif selon la revendication 1, caractérisé par deux poulies de traction (62, 64) montées respectivement sur chacun des patins (30, 32) et quatre poulies de renvoi (54, 56, 58, 60) montées respectivement aux quatre coins du chariot (40), par un moteur pneumatique (52) à mouvements alternatifs fixé sur le chariot (40), par un premier câble de traction (66) tendu entre l'une des extrémités du moteur (52) et le chariot (40) en passant par une poulie de renvoi (54) et la poulie de traction (62) d'un patin (30) pour faire coulisser celui-ci dans une première direction transversale, un second câble de traction (70) tendu entre l'extrémité opposée du moteur (52) et le chariot (40) en passant par deux poulies de renvoi (58, 60) et la poulie de traction (64) de l'autre patin (32) pour faire coulisser celui-ci dans une seconde direction transversale opposée à la première et un câble de synchronisation (72) tendu entre deux points opposés du chariot (40) en passant par la poulie de traction de chacun des patins (30, 32) et trois poulies de renvoi (56, 58, 60) pour transmettre le mouvement de celui des patins qui est tracté par le moteur 52 sur l'autre patin et vice-versa.

4. Dispositif selon la revendication 1, caractérisé par une vis sans fin (80) logé dans un palier du chariot (40) et s'étendant au centre des glissières (46, 48) parallèlement à celles-ci à travers le support central (50), ladite vis (80) étant entraînée en rotation par un moteur électrique (78) fixé sur le chariot (40) pour faire coulisser celui-ci longitudinalement par rapport au support central (50).

5. Dispositif selon la revendication 3, caractérisé en ce que le moteur pneumatique (52) et l'un des patins (32) sont associés, chacun, à un capteur de déplacement (74, 76).

6. Dispositif selon la revendication 3, caractérisé en ce que la pression du moteur pneumatique (52) est réglable.

7. Dispositif selon l'une quelconque des revendications 1 à 6, caractérisé en ce que le chariot (40) est associé à plusieurs télémètres (84, 86, 89) mesurant son déplacement et sa position suivant trois axes de coordonnées orthogonaux.

8. Dispositif selon la revendication 1, caractérisé en ce que le support central (50) est solidaire de la tige (90) du piston (96) d'un cylindre pneumatique (92) dont le déplacement est orthogonal aux axes des glissières longitudinales et transversales et en ce que le cylindre (92) est rotatif autour de l'axe de déplacement de son piston (96) grâce à une suspension à roulement (94) du cylindre (92) dans l'extrémité du bras de manoeuvre (20).

9. Dispositif selon la revendication 8, caractérisé en ce que le cylindre pneumatique (92) est associé à un capteur de déplacement axial (98) du piston (96).

10. Dispositif selon la revendication 8, caractérisé en ce que le degré de liberté angulaire entre le cylindre pneumatique (92) et le bras de manoeuvre (20) est complété par un degré de liberté angulaire entre le piston (96) et le cylindre pneumatique (92) et en ce que ce dernier degré de liberté est neutralisable sur commande grâce à deux ressorts pneumatiques (106, 108) fixés sur le support central (50) de part et d'autre d'un bras (104) solidaire du cylindre pneumatique (92).

11. Dispositif selon la revendication 10 caractérisé en ce que le cylindre pneumatique (92) et son piston (96) sont associés à un capteur angulaire (110) pour mesurer l'angle de la rotation du chariot (40) et du piston (96) permise par le degré de liberté neutralisable.

12. Dispositif selon la revendication 10, caractérisé en ce que le cylindre pneumatique (92) comporte une couronne dentée (97) actionnée par un pignon d'entraînement (99) sous la commande d'un moteur (101) pour modifier l'orientation du chariot (40) par l'intermédiaire du bras (104).

13. Robot pourvu d'un dispositif de manutention automatique selon l'une quelconque des revendications 1 à 12.

14. Robot selon la revendication 13, caractérisé en ce que le robot ne sert qu'au transport d'objets et que le dispositif de manutention ne sert qu'à leur mise en place après immobilisation du robot.

15. Application d'un robot selon les revendications 13 ou 14 au maçonnage intérieur d'une enceinte.

16. Application selon la revendication 15, caractérisée en ce que ladite enceinte est un convertisseur métallurgique.

Fig. 1

Fig. 2

Fig. 3

Fig. 4

Fig. 5

Fig. 6

Fig. 7

122    130

Fig. 8

122

126

126    122    Fig. 9

Fig. 10

126    122

126

122

**Fig. 11**

122

**Fig. 12**

126

**Fig. 13**

122    130

128

126    122

**Fig. 14**

**Office européen
des brevets**

**RAPPORT DE RECHERCHE
EUROPEENNE**

Numéro de la demande

**EP 91 11 5350**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 226 076   (PAUL WURTH)<br>* revendication 1 *<br>– – – | 1 | C 21 C 5/44<br>F 27 D 1/16 |
| A,D | GB-A-2 224 768   (PAUL WURTH)<br>* revendication 1 *<br>– – – | 1 | |
| A | EP-A-0 220 543   (PAUL WURTH)<br>– – – | | |
| A | EP-A-0 226 075   (PAUL WURTH)<br>– – – – – | | |

**DOMAINES TECHNIQUES
RECHERCHES (Int. Cl.5)**

C 21 C 5/44
F 27 D 1/16

**Le présent rapport de recherche a été établi pour toutes les revendications**

| Lieu de la recherche | Date d'achèvement de la recherche | Examinateur |
|---|---|---|
| Berlin | 23 décembre 91 | SUTOR W |